# EUROPÄISCHE PATENTSCHRIFT

(11) **EP 3 015 000 B1**
(45) Veröffentlichungstag und Bekanntmachung des Hinweises auf die Patenterteilung: **21.06.2017**
(21) Anmeldenummer: 15190422.4
(22) Anmeldetag: 19.10.2015
(51) Int. Cl.: A23G 3/36, A23G 3/40, A23G 4/06, A23G 4/08

(54) **VERFAHREN ZUR HERSTELLUNG EINES CANDY-GUMS**
PROCESS FOR PRODUCING A CANDY GUM
PROCÉDÉ DE FABRICATION DE GOMME DE BONBON

(30) Priorität: 30.10.2014 DE 102014222198
(43) Veröffentlichungstag der Anmeldung: 04.05.2016
(73) Patentinhaber: Wacker Chemie AG, 81737 München (DE)
(72) Erfinder: Wimmer, Thomas, 84489 Burghausen (DE); Hauk, Christian, 85354 Freising (DE); Schmidt, Claudia, 84503 Altötting (DE); Schuch, Sandra Maria, Zeilarn 84367 (DE); Seizl, Martin, 80336 München (DE)
(74) Vertreter: Potten, Holger

(56) Entgegenhaltungen:
- WO-A1-2008/119674
- WO-A2-2014/128566
- DE-A1-102007 015 941
- DE-A1-102011 082 981
- DE-T2- 69 927 887
- US-A- 4 491 596
- US-A- 4 601 907
- US-A1- 2006 034 894

## Beschreibung

Die Erfindung betrifft ein Verfahren zur Herstellung eines Candy-Gums.

Ein Candy-Gum im Sinne der vorliegenden Erfindung ist ein Produkt, das sich in einer ersten Kau-Phase wie ein Kaubonbon verhält und dann im Laufe des Kauens zu einem Kaugummi entwickelt.

Kaubonbons sind in zuckerhaltiger und zuckerfreier Ausführung bekannt, gehören zu den Weichkaramellen und unterscheiden sich von den glasartigen Hartkaramellen, die in der Regel gelutscht werden. Im Zusammenhang mit der vorliegenden Erfindung wird unter einem Kaubonbon ein Genuss- oder Lebensmittel verstanden, das nach Aufnahme in die Mundhöhle eines Menschen aufgrund seiner flexiblen Struktur und Konsistenz zum Kauen geeignet ist, das heißt verformbar ist und bei größerer mechanischer Belastung nicht zersplittert oder bricht. Kaubonbons werden üblicherweise in einem Kochprozess hergestellt. Dabei wird eine Mischung aus Saccharose und Glukosesirup, mit Fett und Emulgatoren gekocht und in der Abkühlphase mit Aromen, Genusssäuren und Gelatinelösung versetzt. Die Masse wird unter Zugabe von Luft aufgeschlagen, auf ca. 30 - 40°C abgekühlt und über Kegelroller oder Extruder geformt. Bei zuckerfreien Kaubonbons werden Zucker und Glucosesirup durch eine Mischung aus kristallinen Polyolen und konzentrierten Polyolsirupen ersetzt. Zuckerhaltige Kaubonbons in denen Gelatine durch Weizengluten ersetzt werden kann werden z.B. beschrieben in EP0979611. Zuckerfreie dragierte Kaubonbons werden beschrieben in US 6372271.

Die Kombination von Kaugummi mit Kaubonbon ist bekannt. In EP 2273891B1 wird ein zuckerfreies Isomaltkonfekt beschrieben, welches aus verschiedenen Schichten besteht. Es wird ein mehrschichtiges Laminat aus einer Kaubonbonschicht aus gekochtem Anteil von Isomalt, hydrierten Stärkehydrolysat und weiteren Bestandteilen mit einer Kaugummischicht beschrieben.

Die Herstellung von Kaugummi aus geschmolzenem kristallinem Sorbitol oder aufkonzentrierter Sorbitol-Lösung wird beschrieben in US 3857965. Die Gumbase (Kaugummigrundmasse) wird in einem separaten Prozess hergestellt.

Die Verwendung von gekochtem zuckerhaltigem Sirup für Hartkaramellen oder Sorbitol-Lösung, die durch einen Kochprozess auf 180°C aufkonzentriert wurde, bei der Kaugummiherstellung wird in US 4741905 (Beispiel 2 und 3) gelehrt.

In US 8703228 (Fig. 1) wird die separate Herstellung eines Candy-Systems und einer Gumbase mit anschließender Vermischung der Systeme gezeigt. Nachteilig in allen erwähnten Technologien ist die separate Herstellung der DE102011082981 beschreibt ein Verfahren zur Herstellung eines Kaugummis wobei bei ca. 60°C eine homogene Zusammensetzung aus Polyvinylacetat, Vinyllaurat-Vinylacetat Copolymer und Weichmacher mit Polyolen oder Zucker und Syrup gemischt werden. Aufgabe der vorliegenden Erfindung ist es ein vereinfachtes Herstellungsverfahren für einen Candy-Gum bereitzustellen.

Die Aufgabe wird gelöst durch ein Eintopf-Verfahren, gemäß Anspruch 1 bei welchem eine durch einen Kochprozess aufkonzentrierte Zucker/Glucosesirup-Mischung oder eine Mischung kristalliner Polyole bzw. eine Polyolsirup-Mischung mit Gumbaserohstoffen sowie Geliermitteln, Geschmackstoffen und gegebenenfalls Süssungsmitteln vermischt wird, dadurch gekennzeichnet, dass als Gumbaserohstoffe ausschließlich eine oder mehrere der Komponenten Polyvinylacetat, Vinylacetat-Vinyllaurat-Copolymer, Fett, Wachs und Emulgator eingesetzt werden.

Im erfindungsgemäßen Verfahren wird ein Polyol bzw. eine Polyolmischung, oder eine Mischung aus Zucker und/oder Glucosesirup in Wasser gelöst und durch Erhitzen aufkonzentriert. Gleichzeitig oder anschließend werden Polyvinylacetat, Vinylacetat-Vinyllaurat-Copolymer, Fette, Wachse und Emulgatoren zugegeben.

Die Mischung wird weiter erhitzt und aufkonzentriert, bis die gewünschte Endfeuchte im Produkt erhalten wird.

Ein zuckerfreier Ansatz (Polyolsirupe, Polyollösungen) wird auf 120 - 155°C, bevorzugt bei 125 - 145°C, besonders bevorzugt bei 130 - 140°C erhitzt.

Ein zuckerhaltiger Ansatz, also eine wässrige Lösung enthaltend Zucker und Glucosesirup wird auf 120 - 135°C, bevorzugt auf 125 - 133°C erhitzt.

Die gewünschte Endfeuchte im Produkt liegt vorzugsweise bei 2 Gew.% bis 8 Gew.%, besonders bevorzugt bei 3 Gew.% bis 6 Gew.%.

Nach dem Abkühlen der Masse auf 90 - 110°C wird unter Rühren eine Lösung eines Geliermittels sowie Geschmacksstoffe, Süssungsmittel und gegebenenfalls Farbstoffe zugegeben. Bei den Geschmacksstoffen handelt es sich vorzugsweise um Aromen und Genusssäuren.

Vorzugsweise wird dabei 2 bis 10 Minuten gerührt. Vorzugsweise wird die Temperatur konstant gehalten

Nach Abkühlen der Masse auf 30-40°C kann die Masse geformt und verpackt werden.

Für die Ausformung der fertigen Masse stehen dem Fachmann je nach Konsistenz der Masse geläufige Verfahren zur Verfügung: Über einen Kegelroller und einer Ausziehmaschine kann ein Strang gezogen werden, der direkt in ein Cut&Wrap-Verpackungsmaschine (gleichzeitiges Schneiden und Verpacken) oder eine Prägemaschine läuft. Auch ein Walzen und anschließendes Schneiden ist möglich. Ein weiteres Verfahren zur Verarbeitung ist die Extrusion und Coextrusion, mit der auch gefüllte Produkte hergestellt werden können. Bei gießfähigen Massen kann die Ausformung auch in Mogulanlagen in Stärkepuderformen geschehen. Alternativ können die Massen in elastische oder starre Formen gegossen werden.

Bei Bedarf können Produkte anschließend auch dragiert werden oder mit einem Schokoladenüberzug (Tauch - oder Sprühverfahren) versehen werden.

Das Polyvinylacetat hat vorzugsweise ein gewichtsmittleres Molekulargewicht von 10.000 - 100.000, besonders bevorzugt von 10.000 - 50.000. Das gewichtsmittlere Molekulargewicht Mw wurde bestimmt mittels Size Exclusion Chromatography (SEC) gegen Polystyrol-Standard, in THF, bei 40°C, Flow Rate 1,2 ml/min. Es können auch Gemische von Polyvinylacetaten mit unterschiedlichem Molekulargewicht eingesetzt werden.

Bei dem Vinylacetat-vinyllaurat-Copolymer handelt es sich vorzugsweise um Vinylacetat-vinyllaurat-Copolymere mit einem Monomerverhältnis von 90:10 bis 60:40 (Gew.% Vinylacetat zu Vinyllaurat).

Bei dem Wachs handelt es sich vorzugsweise um typische Wachse wie sie in der Gumbase Herstellung verwendet werde, besonders bevorzugt um Paraffinwachse und mikrokristalline Wachse.

Bei den Fetten handelt es sich vorzugsweise um teil- oder vollgehärtete pflanzliche Fette und Öle, tierische Fette oder Milchfett (z.B. Butter, Sahne).

Der Emulgator ist vorzugsweise ausgewählt aus der Gruppe Lecithin, Glycerinmonostearat, acetylierte Monoglyceride von Speisefettsäuren wie Acetem und Polysorbate.

Bei dem Geliermittel handelt es sich vorzugsweise um Gelatine, Pektine, Agar-Agar, Gummi Arabicum oder Stärke.

Bei den Genusssäuren handelt es sich vorzugsweise um Zitronensäure, Weinsäure, Bernsteinsäure, Milchsäure oder Äpfelsäure.

Das Süssungsmittel ist ausgewählt aus der Gruppe Aspartam, Acesulfam K, Sucralose, Cyclamate, Neohesperidin, Saccharin, Stevia und Thaumatin.

Bei den Polyolen (Zuckeralkoholen) handelt es sich vorzugsweise um Sorbitol, Maltitol, Isomalt, Mannitol, Xylitol, Erythritol oder Lactitol oder eine Mischung einer oder mehrerer dieser Substanzen, die teilweise auch als Sirupe erhältlich sind. Besonders geeignet ist Sorbitol, Maltitol, Isomalt und Mannitol oder eine Mischung einer oder mehrerer dieser Substanzen.

Die Mischung aus Zucker und Glucosesirup hat vorzugsweise ein Gewichtsmengenverhältnis bezogen auf Trockensubstanz von 2 zu 1, bis 1 zu 2.

Vorzugweise liegt das Gewichtsmengenverhältnis von Polyolen, auf Trockenbasis gerechnet, zu Gumbase Rohstoffen im Bereich von 3 zu 1 bis 1 zu 1.

Bei der zuckerhaltigen Variante liegt das bevorzugte Gewichtsmengenverhältnis von Zucker/Glucose (auf Trockenbasis gerechnet) zu Gumbase Rohstoffen im Bereich von 3 zu 1 bis 1 zu 1.

Die Gumbase Rohstoffe werden im Mengenverhältnis von Polyvinylacetat (15 - 40 Gew. %), Vinylacetat-Vinyllaurat-Copolymere (10 - 30 Gew.%), Wachs (1 - 20 Gew. %), Fett (10 - 30 Gew. %) sowie Emulgatoren (2 - 12 Gew. %) eingesetzt, wobei sich die Summe aller Gumbaserohstoffe auf 100% addiert.

Der Anteil im fertigen Candy Gum an Geliermittel beträgt vorzugsweise 0.2 - 3 Gew.%, an Geschmackstoffen vorzugsweise 0.5 - 2.5 Gew.%. Gegebenenfalls werden Süssungsmittel mit einem Anteil von 0.05 - 1.0 Gew.% verwendet.

Das erfindungsgemäße Verfahren funktioniert nur, wenn als Gumbase Rohstoffe Wachs, Polyvinylacetate, Vinylacetat-Vinyllaurat-Copolymere und Emulgatoren verwendet werden. Werden als Gumbaserohstoffe die sonst (für Gumbase) üblichen Rohstoffe Butylrubber, Polyisobuten, Colophoniumharze verwendet, bleiben Elastomerpartikel zurück, wodurch sich die Masse durch ein einfaches Rührorgan nicht homogenisieren lässt. Dies wird im Vergleichsbeispiel 1 gezeigt.

Die folgenden Beispiele dienen der weiteren Erläuterung der Erfindung:
Beispiel 1: Zuckerfreies Candy Gum mit Erdbeergeschmack
   In einem Metallgefäß wird eine Mischung aus 80 g Isomalt und 120 g Sorbitol mit 50 ml Wasser vermengt und unter Rühren und Temperaturerhöhung aufkonzentriert, bis die Polyollösung eine Temperatur von 135°C erreicht. Nach Zugaben von 50 g Polyvinylacetat (VINNAPAS^{®} B 1.5 sp; mittlere Molmasse 15.000), 16 g Vinylacetat-Vinyllaurat-Copolymere (VINNAPAS^{®} B 500/20 VL), 18 g mikrokristallinem Wachs (Penetration 25 mm, Schmelzpunkt 66°C), 3.5 g Acetem (Grinsted^{®}-Acetem von Danisco), 5 g Glycerinmonostearat und 20 g Speisefett (Schmelzpunkt: 32°C) wird die Mischung für 20-30 Minuten gerührt und dabei wieder auf 135°C erwärmt. Die homogene Masse wird abgekühlt auf 120°C. Daraufhin werden 10 g Glycerin, 1 g Sojalecithin und 7 g Triacetin (Glycerin-triacetat) eingerührt und die Masse weiter abgekühlt. Bei ca. 95°C wird eine Lösung von 6 g Gelatine (Bloom: 140) in 10 g Wasser zugegeben und in die Mischung eingearbeitet. Zum Schluss wird die Masse mit 4 g Zitronensäure, 0.7 g Aspartam und 3.6 g Erdbeeraroma vermischt und weiter abgekühlt. Bei ca. 30- 40°C ist die Masse genügend fest und kann ausgeformt und verpackt werden. Das Produkt enthält eine Restfeuchte von 4.6 %. Das erhaltene Produkt kaut sich zunächst wie ein Kaubonbon und wandelt sich bei weiterem Kauen nach wenigen Minuten in einen angenehm zu kauenden Kaugummi.
Beispiel 2: Zuckerfreies Candy Gum mit Kirschgeschmack
   40 g Mannitol und 160 g Sorbitol werden mit 100 ml Wasser vermischt und unter Rühren gekocht und aufkonzentriert. Bei 138°C werden 40 g Polyvinylacetat (VINNAPAS^{®} B 5 sp, Mittlere Molmasse: 25.000), 25 g Vinylacetat-Vinyllaurat-Copolymer (VINNAPAS^{®} B 500/20 VL), 20 g Paraffinwachs, 4 g Acetem, 6 g Glycerinmonostearat und 25 g Speisefett zugegeben und mit dem gekochtem Sirup vermischt. Nach dem Abkühlen auf 115°C werden 2 g Soyalecithin und 5 g Triacetin (Glycerintriacetat) untergemischt, die Masse noch weiter abgekühlt und mit einer Lösung von 8 g Gelatine (Bloom: 140) in 15 g Wasser versetzt. Nach Zugabe von 0.2 g Sucralose, 3.0 g Äpfelsäure und 5.0 g Kirschflavor wird die Masse auf eine Marmorplatte gegossen und durchgeknetet. Dabei kühlt die Masse weiter ab und kann bei ca. 35°C in Platten ausgewalzt werden. Die Platten können in Stücke von ca. 4 g geschnitten werden. Die Restfeuchte liegt bei ca. 3.2%. Das Produkt lässt sich angenehm kauen mit guten organoleptischen Eigenschaften.
Beispiel 3: Zuckerfreies Candy Gum mit Orangengeschmack
   170 g Maltitol-Sirup (Festgehalt: 70%) und 170 g Sorbitol-Sirup (Festgehalt 70%) werden unter Rühren bis zu einer Temperatur von 136°C gekocht und dabei aufkonzentriert. Anschließend werden 35 g Polyvinylacetat (VINNAPAS^{®} B 1. 5 sp, Mittlere Molmasse: 15.000), 35 g Vinylacetat-Vinyllaurat-Copolymer (VINNAPAS^{®} B 500/20 VL), 10 g Paraffinwachs , 3 g Acetem, 7 g Glycerinmonostearat und 32 g Speisefett zugegeben und mit dem gekochtem Sirup vermischt. Die Masse wird auf 110°C abgekühlt und 3 g Sojalecithin zusammen mit 6 g Triacetin werden untergerührt. Nach weiterem Abkühlen auf 98°C werden 10 g Pectin zugegeben und die Masse mit 7 g Orangenöl aromatisiert. Nach dem Abkühlen kann die als dünne Platte erstarrte Masse in Streifen geschnitten werden. Die Streifen haben zu Beginn des Kauens eine Konsistenz eines Kaubonbons. Nach einer Kauzeit von wenigen Minuten wird ein guter Kaugummi erhalten.
Beispiel 4: Zuckerfreies Candy Gum mit "Grüner Apfel"-Geschmack
   Eine Mischung aus 30 g Mannitol , 57 g Sorbitol-Sirup (Festgehalt 70%) und 185 g Maltitol-Sirup (Festgehalt: 70%) werden auf 140°C gekocht. Der aufkonzentrierte Sirup wird mit 30 g Polyvinylacetat (VINNAPAS^{®} B 1. 5 sp, Mittlere Molmasse: 15.000), 40 g Vinylacetat-Vinyllaurat-Copolymer (VINNAPAS^{®} B 500/20 VL) und 15 g mikrokristallinem Wachs vermengt und 15 Minuten bei 130°C gerührt. Anschließend wird noch 30 g Speisefett, sowie 6 g Acetem zugegeben und weitere 5 Minuten gerührt, bis eine homogene Masse entstanden ist.
   Bei 120°C werden noch zugegeben: 8 g Triacetin, 5 g Glycerinmonostearat und 3 g entöltes Lecithinpulver. Nach Abkühlen auf 100°C wird eine Lösung von 8 g Gelatine (140 Bloom) in 16 ml Wasser zugegeben. Zum Schluss werden 5 g "Grüner-Apfel"-Flavor, 3.5 g Zitronensäure und 0.4% Aspartam untergemischt und die Masse auf ca. 30°C abgekühlt. Das erhaltene Produkt kaut sich zunächst wie ein Kaubonbon und wandelt sich bei weiterem Kauen nach wenigen Minuten in einen angenehm zu kauenden Kaugummi.
Beispiel 5: Zuckerfreies Candy Gum mit Cola-Geschmack
   Eine Mischung aus 60 g Mannitol und 270 g Maltitol-Sirup (Festgehalt: 70%) werden auf 140°C gekocht. Der aufkonzentrierte Sirup wird mit 35 g Polyvinylacetat (VINNAPAS^{®} B 1. 5 sp, Mittlere Molmasse: 15.000), 42 g Vinylacetat-Vinyllaurat-Copolymer (VINNAPAS^{®} B 500/20 VL) und 10 g mikrokristallinem Wachs vermengt und 15 Minuten bei 130°C gerührt. Anschließend wird noch 50 g Speisefett, sowie 5 g Acetem zugegeben und weitere 5 Minuten gerührt, bis eine homogene Masse entstanden ist.
   Bei 115°C werden noch zugegeben: 8 g Triacetin, 5 g Glycerinmonostearat und 3 g entöltes Lecithinpulver. Nach Abkühlen auf 100°C wird eine Lösung von 6 g Gelatine (140 Bloom) in 12 ml Wasser zugegeben. Zum Schluss werden 5 g "Cola"-Flavor, 4.0 g Weinsäure und 0.3% Aspartam untergemischt und die Masse auf ca. 30°C abgekühlt. Die in Stücken geschnittene Masse lässt sich gut kauen und wird nach wenigen Minuten zu einem Kaugummi.
Beispiel 6: Zuckerfreies Candy Gum mit Minz-Geschmack
   Die Durchführung entspricht Beispiel 1 , nur das Isomalt durch Xylitol, und das Erdbeeraroma durch ein Pfefferminzöl ersetzt wurde. Das erhaltene Candy Gum lässt sich gut kauen und hat einen frischen Minz-Geschmack.
Beispiel 7: Zuckerhaltiges Candy Gum mit Kaffee-Aroma
   100 g Zucker werden mit 180 g Glucosesirup (42 DE) und 35 g Wasser verrührt und durch Kochen auf eine Temperatur von 133 °C gebracht. Danach werden 16 g mikrokristallines Wachs, 4 g Glycerinmonostearat, 4 g Acetem, 2 g Soja-Lecithin, 15 g Pflanzenfett (Schmelzpunkt 32°C) , 40 g Polyvinylacetat (VINNAPAS^{®} B 1. 5 sp, Mittlere Molmasse: 15.000) und 20 g Vinylacetat-Vinyllaurat-Copolymer (VINNAPAS^{®} B 500/40 VL) zugegeben, bei 125°C homogenisiert und auf 95°C abgekühlt. Nach Zugabe von 5 g Glycerin, 5 g Triacetin, einer Lösung von 2 g Gelatine (120 Bloom) in 3 g Wasser und 10 ml frisch gebrühter Espresso-Kaffee wird die Masse für 3 Minuten gerührt und auf einer Marmorplatte auf 35°C abgekühlt. Die nun feste Masse wird in mundgerechte Stücke (ca. 3.5 g) geschnitten. Das so erhaltene Candy Gum kaut sich zunächst wie ein Kaubonbon und wandelt sich bei weiterem Kauen nach wenigen Minuten in einen angenehm zu kauenden Kaugummi.
Beispiel 8: Zuckerhaltiges Candy Gum mit Karamell-Geschmack
   120 g Zucker, 150 g Glucosesirup (42 DE) und 120 g Sahne (30% Fettanteil) werden gekocht, bis die Mischung eine Temperatur von 130°C erreicht. Danach werden 16 g mikrokristallines Wachs, 3 g Glycerinmonostearat, 5 g Acetem, 2 g Lecithin, 20 g Pflanzenfett (Schmelzpunkt 32°C), 50 g Polyvinylacetat (VINNAPAS^{®} B 1. 5 sp, Mittlere Molmasse: 15.000) und 20 g Vinylacetat-Vinyllaurat-Copolymer (VINNAPAS^{®} B 500/20 VL) zugegeben und bei 120°C gerührt, bis eine homogene Masse entsteht. Nach Zugabe von 10 g Glycerin und 6 g Triacetin wird die Masse auf 100°C gekühlt und eine Lösung von 2 g Gelatine (Bloom 140) in 4 g Wasser eingearbeitet. Die Masse wird in kleine Förmchen gegossen. Nach dem Erkalten werden Candy Gum mit gutem Karamellgeschmack erhalten.
Beispiel 9: Zuckerhaltiges Candy Gum aus Fruchtsirup
   Eine Mischung aus 100 g Zucker, 120 g eines käuflichen Fruchtsirups (D'Arbo Johannisbeere Sirup, schwarz) und 100 g Glucosesirup (42 DE) wird auf 130°C gekocht. Danach werden 12 g mikrokristallines Wachs, 3 g Glycerinmonostearat, 5 g Acetem, 2 g Lecithin, 15 g Pflanzenfett (Schmelzpunkt 32°C), 50 g Polyvinylacetat (VINNAPAS^{®} B 1. 5 sp, Mittlere Molmasse: 15.000) und 20 g Vinylacetat-Vinyllaurat-Copolymer (VINNAPAS^{®} B 500/20 VL) zugegeben und bei 120°C gerührt, bis eine homogene Masse entsteht. Nach Zugabe von 6 g Glycerin und 6 g Triacetin wird die Masse auf 100°C gekühlt und eine Lösung von 2 g Gelatine (Bloom 140) in 4 g Wasser eingearbeitet. Nach Abkühlen wird die Masse in Stücke mit 4 g geschnitten und in gewachstes Bonbonpapier verpackt. Wiederum wird ein Candy Gum mit gutem Geschmack und angenehmer Textur erhalten.

### Vergleichsbeispiel 1:

Die Durchführung erfolgt analog Beispiel 1. Übliche Gumbase Komponenten werden als Einzelsubstanzen zugegeben.

In einem Metallgefäß wird eine Mischung aus 80 g Isomalt und 120 g Sorbitol mit 50 ml Wasser vermengt und unter Rühren und Temperaturerhöhung aufkonzentriert, bis die Polyollösung eine Temperatur von 135°C erreicht. Nach Zugaben von 5.4 g Butylrubber RB 101-3, Lanxess, 5.4 g Polyisobuten (Oppanol^{®} B12 SFN, BASF), 33 g Polyvinylacetat (VINNAPAS^{®} B 1.5 sp; mittlere Molmasse 15.000), 28 g teilhydrierter Kolophoniumharz Glycerinester (Eastmann, Staybelite^{®} 5E) und 15 g mikrokristallines Wachs wird die Mischung für 20-30 Minuten gerührt und dabei wieder auf 135°C erwärmt. Die Masse wird abgekühlt auf 120°C. Daraufhin werden 10 g Glycerin, 1 g Sojalecithin und 7 g Triacetin (Glycerintriacetat) eingerührt und die Masse weiter abgekühlt. Bei ca. 95°C wird eine Lösung von 6 g Gelatine (Bloom: 140) in 10 g Wasser zugegeben und in die Mischung eingearbeitet. Zum Schluss wird die Masse mit 4 g Zitronensäure, 0.7 g Aspartam und 3.6 g Erdbeeraroma vermischt und weiter abgekühlt.

Die Masse ist nicht homogen, einzelne Elastomerpartikel sind deutlich erkennbar. Die Masse zerfällt beim Kauen, einzelne Partikel sind deutlich unangenehm spürbar.

## Patentansprüche

1. Eintopf-Verfahren zur Herstellung eines Candy-Gums, bei welchem eine durch einen Kochprozess aufkonzentrierte Zucker/Glucosesirup-Mischung oder eine Mischung kristalliner Polyole bzw. eine Polyolsirup-Mischung mit Gumbaserohstoffen sowie Geliermitteln, Geschmackstoffen und gegebenenfalls Süssungsmitteln vermischt wird, **dadurch gekennzeichnet, dass** als Gumbaserohstoffe ausschließlich eine oder mehrere der Komponenten Polyvinylacetat, Vinylacetat-Vinyllaurat-Copolymer, Fett, Wachs und Emulgator im Mengenverhältnis von Polyvinylacetat (15 - 40 Gew. %), Vinylacetat-Vinyllaurat-Copolymere (10 - 30 Gew.%), Wachs (1 - 20 Gew. %), Fett (10 - 30 Gew. %) sowie Emulgatoren (2 - 12 Gew. %) eingesetzt werden, wobei sich die Summe aller Gumbaserohstoffe auf 100% addiert.

2. Verfahren nach Anspruch 1, **dadurch gekennzeichnet, dass** ein Polyol bzw. eine Polyolmischung, oder eine Mischung aus Zucker und/oder Glucosesirup in Wasser gelöst und durch Erhitzen aufkonzentriert wird und gleichzeitig oder anschließend Polyvinylacetat, Vinylacetat-Vinyllaurat-Copolymer, Fette, Wachse und Emulgatoren zugegeben werden und die Mischung weiter erhitzt und aufkonzentriert wird, bis eine gewünschte Endfeuchte im Produkt erhalten wird.

3. Verfahren nach Anspruch 1 oder 2, **dadurch gekennzeichnet, dass** das Polyvinylacetat ein gewichtsmittleres Molekulargewicht von 10.000 - 100.000, besonders bevorzugt von 10.000 - 50.000 hat und es sich bei dem Vinylacetat-vinyllaurat-Copolymer um ein Vinylacetat-vinyllaurat-Copolymere mit einem Monomerverhältnis von 90:10 bis 60:40 handelt.

4. Verfahren nach Anspruch 1, 2 oder 3, **dadurch gekennzeichnet, dass** ein zuckerfreier Ansatz (Polyolsirupe, Polyollösungen) auf 120 - 155°C, bzw. ein zuckerhaltiger Ansatz auf 120 - 135°C erhitzt wird.

5. Verfahren nach einem der Ansprüche 1 bis 4, **dadurch gekennzeichnet, dass** die gewünschte Endfeuchte im Produkt bei 2 Gew.% bis 8 Gew.% liegt.

6. Verfahren nach einem der Ansprüche 1 bis 5, **dadurch gekennzeichnet, dass** die entstandene Masse auf 90 - 110°C abgekühlt wird und sodann unter Rühren eine Lösung eines Geliermittels sowie Geschmacksstoffe, Süssungsmittel und gegebenenfalls Farbstoffe zugegeben werden.

7. Verfahren nach Anspruch 6 **dadurch gekennzeichnet, dass** es sich bei den Geschmacksstoffen um Aromen und Genusssäuren handelt.

8. Verfahren nach Anspruch 6 oder 7 **dadurch gekennzeichnet, dass** 2 bis 10 Minuten gerührt wird und die Temperatur beim Rühren konstant gehalten wird.

9. Verfahren nach Anspruch 6, 7 oder 8 **dadurch gekennzeichnet, dass** die erhaltene Masse auf 30-40°C abgekühlt, geformt und verpackt wird.

## Claims

1. One-pot process for producing a candy gum in which a sugar/glucose syrup mixture concentrated by a boiling process, or a mixture of crystalline polyols, or a polyol syrup mixture is mixed with gum base raw materials and also gelling agents, taste agents, and optionally sweeteners, **characterized in that** the gum base raw materials used are exclusively one or more of the components polyvinyl acetate, vinyl acetate-vinyl laurate copolymer, fat, wax and emulsifier in the quantity ratio of polyvinyl acetate (15-40% by weight), vinyl acetate-vinyl laurate copolymers (10-30% by weight), wax (1-20% by weight), fat (10-30% by weight) and also emulsifiers (2-12% by weight), wherein the sum of all the gum base raw materials totals 100%.

2. Process according to Claim 1, **characterized in that** a polyol or a polyol mixture, or a mixture of sugar and/or glucose syrup is dissolved in water and concentrated by heating and at the same time or subsequently polyvinyl acetate, vinyl acetate-vinyl laurate copolymer, fats, waxes and emulsifiers are added, and the mixture is further heated and concentrated until a desired final moisture is obtained in the product.

3. Process according to Claim 1 or 2, **characterized in that** the polyvinyl acetate has a weight-average molecular weight of 10 000-100 000, particularly preferably 10 000-50 000, and the vinyl acetate-vinyl laurate copolymer is a vinyl acetate-vinyl laurate copolymer having a monomer ratio from 90:10 to 60:40.

4. Process according to Claim 1, 2 or 3, **characterized in that** a sugar-free batch (polyol syrups, polyol solutions) is heated to 120-155°C, or a sugar-containing batch is heated to 120-135°C.

5. Process according to any one of Claims 1 to 4, **characterized in that** the desired final moisture in the product is 2% by weight to 8% by weight.

6. Process according to any one of Claims 1 to 5, **characterized in that** the resultant mass is cooled to 90-110°C and then a solution of a gelling agent and also taste agents, sweeteners and optionally dyes are added with stirring.

7. Process according to Claim 6, **characterized in that** the taste agents are flavorings and edible acids.

8. Process according to Claim 6 or 7, **characterized in that** the mixture is stirred for 2 to 10 minutes and the temperature is kept constant during the stirring.

9. Process according to Claims 6, 7 or 8, **characterized in that** the mass obtained is cooled to 30-40°C, shaped and packaged.

## Revendications

1. Procédé monotope pour la fabrication d'une gomme de bonbon, selon lequel un mélange de sucre/sirop de glucose concentré par un procédé de cuisson ou un mélange de polyols cristallins ou un mélange de sirop de polyol est mélangé avec des matières premières de base de gomme, ainsi que des agents gélifiants, des agents aromatisants et éventuellement des agents édulcorants, **caractérisé en ce qu'**en tant que matières premières de base de gomme, exclusivement un ou plusieurs des composants polyacétate de vinyle, copolymère d'acétate de vinyle-laurate de vinyle, matière grasse, cire et émulsifiant sont utilisés en une proportion de polyacétate de vinyle (15 à 40 % en poids), copolymères d'acétate de vinyle-laurate de vinyle (10 à 30 % en poids), cire (1 à 20 % en poids), matière grasse (10 à 30 % en poids) et émulsifiants (2 à 12 % en poids), la somme de toutes les matières premières de base de gomme étant de 100 %.

2. Procédé selon la revendication 1, **caractérisé en ce qu'**un polyol ou un mélange de polyols ou un mélange de sucre et/ou de sirop de glucose est dissous dans de l'eau et concentré par chauffage et, simultanément ou ultérieurement, du polyacétate de vinyle, un copolymère d'acétate de vinyle-laurate de vinyle, des matières grasses, des cires et des émulsifiants sont ajoutés, et le mélange est encore chauffé et concentré jusqu'à l'obtention d'une humidité finale souhaitée dans le produit.

3. Procédé selon la revendication 1 ou 2, **caractérisé en ce que** le polyacétate de vinyle a un poids moléculaire moyen en poids de 10 000 à 100 000, de manière particulièrement préférée de 10 000 à 50 000, et le copolymère d'acétate de vinyle-laurate de vinyle est un copolymère d'acétate de vinyle-laurate de vinyle ayant un rapport entre les monomères de 90:10 à 60:40.

4. Procédé selon la revendication 1, 2 ou 3, **caractérisé en ce qu'**une préparation sans sucre (sirops de polyol, solutions de polyol) est portée à une température de 120 à 155 °C, et une préparation contenant du sucre à une température de 120 à 135 °C.

5. Procédé selon l'une quelconque des revendications 1 à 4, **caractérisé en ce que** l'humidité finale souhaitée dans le produit est de 2 % en poids à 8 % en poids.

6. Procédé selon l'une quelconque des revendications 1 à 5, **caractérisé en ce que** la masse formée est refroidie à une température de 90 à 110 °C, puis une solution d'un agent gélifiant, ainsi que des agents aromatisants, des agents édulcorants et éventuellement des colorants sont ajoutés sous agitation.

7. Procédé selon la revendication 6, **caractérisé en ce que** les agents aromatisants sont des arômes et des acides alimentaires.

8. Procédé selon la revendication 6 ou 7, **caractérisé en ce qu'**une agitation est effectuée pendant 2 à 10 minutes et la température est maintenue constante pendant l'agitation.

9. Procédé selon la revendication 6, 7 ou 8, **caractérisé en ce que** la masse obtenue est refroidie à une température de 30 à 40 °C, façonnée et emballée.
